Europäisches Patentamt

European Patent Office

Office européen des brevets

(11) Veröffentlichungsnummer: **0 036 187**
**A1**

## (12) EUROPÄISCHE PATENTANMELDUNG

(21) Anmeldenummer: **81101839.9**

(22) Anmeldetag: **12.03.81**

(51) Int. Cl.$^3$: **G 11 B 5/48**
**H 04 N 5/78**

(30) Priorität: **19.03.80 DE 3010580**

(43) Veröffentlichungstag der Anmeldung:
**23.09.81 Patentblatt 81/38**

(84) Benannte Vertragsstaaten:
**CH DE FR GB IT LI NL SE**

(71) Anmelder: **SIEMENS AKTIENGESELLSCHAFT Berlin
und München
Postfach 22 02 61
D-8000 München 22(DE)**

(72) Erfinder: **Kleinschmidt, Peter, Dipl.-Phys.
Klagenfurterstrasse 12
D-8000 München 90(DE)**

(72) Erfinder: **Meixner, Hans, Dr. Dipl.-Phys.
Max-Planck-Strasse 5
D-8013 Haar(DE)**

(54) **Aktuator für Video-Bandgerät.**

(57) Gerät mit zwei piezokeramischen Folienstreifen (2, 3) und einem dazwischen angeordneten Aluminium- oder Titanstreifen (4), die mit vorgegebenem Klebstoff fest miteinander verbunden sind und die in engen Grenzen liegende Dickenabmessungen haben und wobei dieser zusammengesetzte Biegestreifen (1) eine Trapezform ($B_1$, $B_2$) bezüglich seiner Breite hat und an dessen schmalerem Ende ($B_2$) der Magnetkopf (10) zu befestigen ist.

FIG 1

EP 0 036 187 A1

SIEMENS AKTIENGESELLSCHAFT          Unser Zeichen
Berlin und München                  VPA   80 P 7 0 2 5 E

## Aktuator für Video-Bandgerät.

Die Erfindung bezieht sich auf einen Aktuator für ein
Video-Bandgerät, wie er im Oberbegriff des Patentanspruchs 1 angegeben ist.

Aus dem Stand der Technik sind Video-Bandgeräte und insbesondere Video-Kassetten-Recorder (VCR) bekannt, in
denen Magnetköpfe zum Aufzeichnen und zum Abtasten der
in Spuren aufzuzeichnenden bzw. aufgezeichneten Video-
Signale dienen. Zur Ausnutzung der verfügbaren Bandfläche ist vorgesehen, daß die Aufzeichnungsspuren, z.B.
Schrägspuren, auf dem Band dicht aneinanderliegen, wobei die Abstände zwischen den einzelnen Spuren sogar
kleiner als die Spurbreite sein können. Diese Aufzeichnungstechnik erfordert außerordentlich hohe Genauigkeit
der mechanischen Halterung und Lage der aufzeichnenden
und/oder abtastenden Magnetköpfe.

Es ist praktisch unmöglich, einen Magnetkopf in einem
wie oben angegebenen Gerät von vornherein so genau justiert anzubringen, daß die Lage dieses Magnetkopfes
im Betrieb fehlerfrei ist. Erst recht ist es praktisch
unmöglich, daß eine vielleicht anfänglich korrekte Lage
des Magnetkopfes auch noch nach längerer Gebrauchsdauer
ausreichend fehlerfrei ist.

Dem Stand der Technik gemäß werden Aktuatoren verwendet,
mit denen die im Video-Gerät angebrachten Magnetköpfe
in ihrer mechanischen Lage elektrisch nachjustiert werden können. Solche Ausführungen sehen vor, daß der jeweilige Magnetkopf auf dem elektrisch bewegbaren Ende
eines piezokeramischen Biegestreifens angebracht ist,

Bts 1 Bla / 17.3.1980

der durch Anlegen verschieden hoher elektrischer Spannung an diesen Biegestreifen vermöge des piezoelektrischen Effekts einstellbar große Auslenkung aus einer Ruhelage ausführt. Ein solcher piezokeramischer Biegestreifen besteht aus zwei miteinander fest verbundenen piezokeramischen Folien in Streifenform, wobei dieser bilaminare Körper längliche Rechteckform hat.

Es ist eine Aufgabe der vorliegenden Erfindung, einen solchen Aktuator anzugeben, der bei möglichst geringer Baugröße, d.h. Baulänge, einerseits und mit möglichst geringer elektrischer Leistung andererseits über den vorgeschriebenen Auslenkungsbereich hinweg einstellbar ist, wobei die Ansprechgeschwindigkeit, d.h. der erforderliche Zeitraum für steuerbare Änderung von einem Auslenkungszustand zum nächsten Auslenkungszustand, möglichst gering sein soll. Dem entspricht eine hohe Nachführgeschwindigkeit des anzugebenden neuen Aktuators.

Diese Aufgabe wird mit einem wie im Oberbegriff des Patentanspruchs 1 angegebenen Aktuator erfindungsgemäß mit den Merkmalen des Kennzeichens des Patentanspruchs 1 gelöst. Weitere Ausgestaltungen und Weiterbildungen der Erfindung gehen aus den Unteransprüchen hervor.

Die Erfindung besteht in einer Kombination einer Mehrzahl von aufeinander und mehrfach untereinander abgestimmten Merkmalen bzw. Bemessungen, die insgesamt eine optimale Lösung der gestellten Aufgabe ergeben. Das zwischen den piezokeramischen Folien befindliche Trägerblech aus an seinen Oberflächen aufgerauhtem Aluminium oder Titan, einem leichten Metall, ermöglicht einerseits eine Abstandshalterung der beiden piezokeramischen Folien des bilaminaren Aufbaues des piezoelektrischen Biegesystems des Streifens, ohne daß damit störende Effekte einer Nachgiebigkeit bzw. eines Fließverhaltens neu auftreten. Augrund dieses Abstandes bei gleich dicken piezokeramischen Folien liegt die neutrale Faser bei einem erfindungsgemäßen Aktuator - vergleichsweise zu bekannten Aktuatoren mit bilaminaren Aufbau - außerhalb der Klebschichten. Dazu gehört auch die Verwendung des heißhärtenden Klebers, der außerdem auch den zu setzenden Rahmen der wirtschaftlichen Herstellbarkeit einhält. Zusammen mit den angegebenen Bemessungen läßt sich mit der anspruchsgemäßen Auswahl des Trägerbleches nicht nur das notwendige Mindestmaß der Ansprechgeschwindigkeit des erfindungsgemäßen Biegestreifens einhalten, sondern darüber hinaus sogar ein sehr großer Geschwindigkeitswert erreichen. Der erfindungsgemäße Biegestreifen ist somit sowohl für rasche Änderungen der Lage des Magnetkopfes zu verwenden als auch in seiner Auslenkung sehr konstant bei geforderter langzeitiger unveränderter Auslenkung. Die gemäß einer Ausgestaltung vorgesehenen Durchbrüche des Trägerbleches lassen eine (weitere) Erhöhung der Geschwindigkeit ohne Einbuße an Ansprechempfindlichkeit und Langzeitkonstanz erreichen.

Weitere Erläuterungen der Erfindung gehen aus der nachfolgenden Figurenbeschreibung eines bevorzugten Ausführungsbeispiels und seiner Weiterbildung hervor.

Fig.1    zeigt eine perspektivische, nur angenähert maßstäbliche Prinzipskizze des Biegestreifens eines erfindungsgemäßen Aktuators.

Fig.2    zeigt in Aufsicht ein Trägerblech mit gemäß einer Ausbildung vorgesehenen Durchbrüchen.

Mit 1 ist der Biegestreifen eines erfindungsgemäßen Aktuators bezeichnet, der abgesehen von dem Magnetkopf 10 aus den beiden piezokeramischen Folien 2 und 3 und dem Trägerblech 4 besteht. Mit 5 ist gestrichelt eine Einspannvorrichtung in ihrer Gesamtheit angedeutet, in der das in der Figur linksseitige Ende des Biegestreifens 1 fest eingespannt ist. Die Länge des Biegestreifens 1 innerhalb dieser Einspannung 5 und der Einspanndruck sind so bemessen, daß eine Biegung des elektrisch angeregten Biegestreifens innerhalb des Einspannbereiches praktisch ausgeschlossen ist.

Die Dicke $d_1$ der piezokeramischen Folie 2 und die Dicke $d'_1$ der oiezokeramischen Folie 3 sind wenigstens angenähert gleich groß und kleiner als 0,2 mm. Für die Dicke $d_2$ des Trägerbleches 4 ist vorgesehen

$$0,5 \cdot d_1 < d_2 < 2 \cdot d_1 \, .$$

Die Gesamtlänge L des nichteingespannten Anteils des Biegestreifens 1 ist größer als das 20-fache der Gesamtdicke D des Biegestreifens 1 ($L > 20 \cdot D$).

Die jeweils aufeinanderliegenden Oberflächen der piezokeramischen Folien 2 und 3 einerseits und des Trägerbleches 4 andererseits sind mit einem heißhärtenden Kleber, wie z.B. AV8 der Fa. Ciba, miteinander fest und dauerhaft verklebt.

Auf den jeweils äußeren Oberflächen der Folien 2 und 3 sind Elektrodenbeschichtungen 21 und 31 mit Anschlüssen 121 und 131 angebracht. Ein elektrischer Anschluß des Trägerbleches ist mit 141 bezeichnet. Diese Anschlüsse dienen zur Zuführung der zur steuerbaren Auslenkung des Magnetkopfes 10 dienenden elektrischen Spannung.

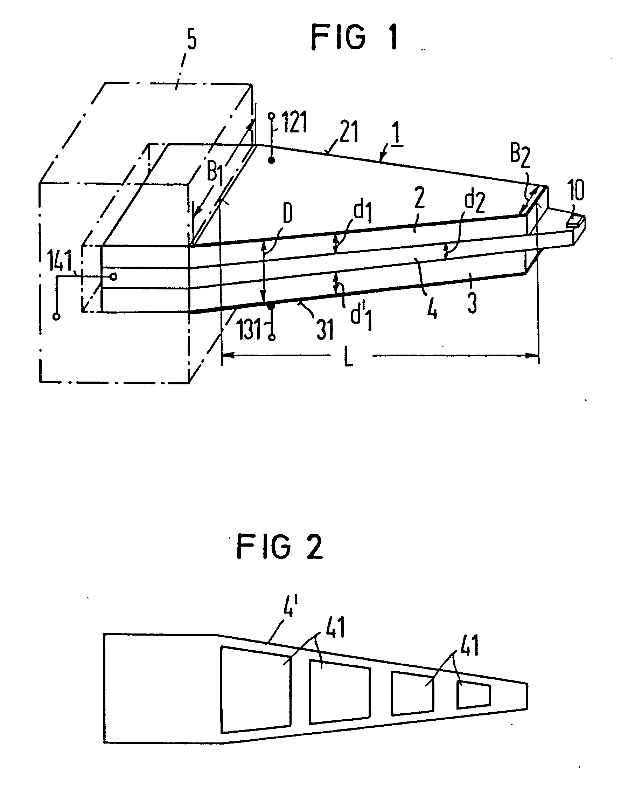

Wie aus der Fig.1 ersichtlich, hat der Biegestreifen 1 eine Trapezform, wobei die Breite $B_1$ an dem in der Figur linksseitigen Einspann-Ende des Biegestreifens 1 das 5- bis 2-fache der Breite $B_2$ des gegenüberliegenden verjüngten Endes des aktiven Teiles des Biegestreifens ist. Unter aktivem Teil des Biegestreifens ist derjenige Anteil außerhalb der Einspannung zu verstehen, bei dem piezokeramische Folie vorhanden ist. Bei der speziellen Ausführungsform der Fig.1 ragt das Trägerblech 4 mit einer vergleichsweise geringen Länge über den Bereich der piezokeramischen Folien 2 und 3 hinaus, wobei an diesem Anteil der Magnetkopf 10 am Biegestreifen 1 befestigt ist. Eine solche Ausführungsform hat deshalb besonderen Vorteil, weil sich ein wie bekannter Magnetkopf leichter an Metall als an Keramik, und zwar mit hoher Präzision der Abmessung, anbringen läßt. Ein erfindungsgemäßer Biegestreifen hat z.B. die Abmessungen $d_1 = d'_1 = d_2$ " 150 µm mit Aluminium als Trägerblech und $B_1 = 7$ mm und $B_2 = 3$ mm sowie L = 13 mm.

Fig.2 zeigt eine Aufsicht eines Trägerbleches 4', wie es zweckmäßigerweise in einem Biegestreifen 1 nach Fig.2 zu verwenden ist. Die feste Verklebung des Trägerbleches 4' mit den piezokeramischen Folien 2 und 3 erfolgt im wesentlichen im Bereich außerhalb der Durchbrüche (41). Es ist nur von unwesentlichem Nachteil, wenn die im Innern des Biegestreifens 1 durch die Durchbrüche des Trägerbleches 4' gegebenen Hohlräume zu einem Anteil mit Klebstoff angefüllt sind.

3 Patentansprüche
2 Figuren

Patentansprüche:

1. Aktuator für Video-Gerät mit einem an einem Ende eingespannten mehr-laminaren piezokeramischen Biegestreifen, an dessen sich infolge piezoelektrischer Anregung bewegendem anderen Ende der Magnetkopf befestigt ist, g e k e n n z e i c h n e t durch einen solchen Biegestreifen (1) aus zwei piezokeramischen Folien (2, 3) und einem dazwischen befindlichen Trägerblech (4) aus oberflächlich aufgerauhtem Aluminium oder Titan, der außerhalb der Einspannung trapezförmig mit zum Ende mit daran befestigtem Magnetkopf die kleinere Breite hat, dadurch, daß die Dicke $d_1$ der einen piezokeramischen Folie (2, 3) kleiner 0,2 mm und wenigstens angenähert gleich der Dicke $d'_1$ der anderen piezokeramischen Folie (2, 3) ist, und die Dicke $d_2$ des Trägerbleches 0,5 bis 2 mal der Dicke $d_1$ ungefähr $d'_1$ ist, und daß die Länge (L) des Biegestreifens außerhalb der Einspannung wenigstens 20 mal größer als die gesamte Dicke $D = d_1 + d'_1 + d_2$ ist, und dadurch, daß das Trägerblech und die piezokeramischen Folien (2, 3) mit heißhärtendem Kleber dauerhaft miteinander verbunden sind.

2. Aktuator nach Anspruch 1, g e k e n n z e i c h - n e t dadurch, daß das Verhältnis der Breite B am Einspann-Ende des Biegestreifens (1) fünf- bis zweimal so breit wie die Breite $B_2$ an demjenigen Ende des Biegestreifens ist, an dem der Magnetkopf befestigt ist.

3. Aktuator nach Anspruch 1 oder 2, g e k e n n - z e i c h n e t dadurch, daß das Trägerblech (4) im Bereich außerhalb der Einspannung solche Durchbrüche aufweist, die im Innern des zusammengesetzten Biegestreifens liegen (Fig.2).

1/1

## FIG 1

## FIG 2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 919 391 (SONY)<br>+ Fig. 3; Seite 12, Zeilen 14-25 + | 2 |
| | DE - A1 - 2 915 881 (SONY)<br>+ Fig. 3; Seite 12, Zeile 31 - Seite 13, Zeile 9 + | 2 |
| | DE - A1 - 2 901 677 (SONY)<br>+ Fig. 14; Fig. 5-7; Seite 26, Zeile 27 - Seite 28, Zeile 13; Seite 41, Zeilen 1-20 + | 1,3 |
| A | DE - A1 - 2 837 104 (SONY)<br>+ Fig. 2a; Seite 13, Zeilen 1-21 + | 1,2 |
| P | DE - A1 - 3 021 430 (SONY) (18-12-1980)<br>+ Seite 12, Zeile 24 - Seite 13, Zeile 13; Fig. 8 +<br>& FR-A1-2 458 866 (02-01-1981)<br>& GB-A -2 050 671 (07-01-1981)<br>& NL-A -8 003 359 (11-12-1980)<br>& SE-A -8 004 231 (10-12-1980) | 1,2 |
| P | DE - A1 - 3 016 748 (SONY) (13-11-1980)<br>+ Seite 8, Zeile 23 - Seite 10, Zeile 31; Seite 12, Zeile 22 bis Seite 13, Zeile 5; Fig. 1-5 +<br>& FR-A1-2 455 840 (28-11-1980)<br>& GB-A -2 052 151 (21-01-1981)<br>& NL-A -8 002 472 (04-11-1980) | 1 |

**KLASSIFIKATION DER ANMELDUNG (Int. Cl.³)**

G 11 B 5/48

H 04 N 5/78

**RECHERCHIERTE SACHGEBIETE (Int. Cl.³)**

G 11 B 5/00

G 11 B 21/00

H 04 N 5/00

H 01 L 41/08

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Grunden angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 25-05-1981 | DIMITROW |

EPA form 1503.1  06.78